# EUROPEAN PATENT SPECIFICATION

(11) **EP 0 646 763 B1**
(45) Date of publication and mention of the grant of the patent: **20.08.1997**
(21) Application number: 94303594.9
(22) Date of filing: 19.05.1994
(51) Int. Cl.: F42C 19/08, B60R 21/26

(54) **Metal igniter tube boot with permanent retention system**
Führungselement mit permanenten Haltemitteln für ein metallisches Zündrohr
Pièce de guidage pour un tube d'allumage métallique, comportant des moyens de retenue permanents

(30) Priority: 02.08.1993 US 100795
(43) Date of publication of application: 05.04.1995
(73) Proprietor: MORTON INTERNATIONAL, INC., Chicago Illinois 60606-1596 (US)
(72) Inventor: Armstrong, C. Wallace III, Huntsville, Utah 84317 (US); Lindsey, David W., Ogden, Utah 84403 (US)
(74) Representative: Bankes, Stephen Charles Digby

(56) References cited:
- EP-A- 0 168 588
- FR-A- 1 051 698
- US-A- 3 618 521
- US-A- 3 766 858
- US-A- 4 370 930

## Description

This invention relates to an improvement in the mechanism for igniting a gas generator or inflator of the type that utilizes the combustion of a solid fuel gas generant composition for the generation of a gas to inflate an inflatable crash protection air bag or cushion. The invention is particularly advantageous for use in a gas generator provided on the passenger side of an automotive vehicle.

Typically, a solid fuel gas generator for the passenger side of an automotive vehicle is elongated. In one embodiment, the gas generator has a length of 30.02 cm (11.82 inches) and an overall diameter of 6.77 cm (2.43 inches). An elongated tubular outer housing for the generator advantageously may be made of aluminum. For most of the length thereof, the outer housing has a relatively thin cylindrical wall in which a plurality of gas exit holes or ports are provided.

One end of the outer housing, termed the stud end, is closed by material formed integrally therewith and includes a threaded stud projecting therefrom. The other end of the outer housing, termed the base end, is closed by a flange. The flange member is attached in a sealing manner to the base end of the outer housing by a suitable process such as inertia welding. A welding process that may be employed is described in US-A- 4,547,942 to Adams et al. The flange member serves as a squib and initiator holder.

Extending for a substantial portion of the length of the outer housing and centrally thereof so as to be generally concentric therewith, is an elongated generally cylindrical tubular member comprising an igniter tube. The igniter tube contains ignition granules of an appropriate pyrotechnic material capable of providing rapid deflagration. A squib and initiator are provided in operative relation with and close to the end of the igniter tube that is adjacent to the base end of the housing. At the stud end of the housing the igniter tube is closed by a rubber boot. The rubber boot incorporates an ignition granule retention disk.

A tube locator cap comprising a silicone pad is positioned adjacent to the inner side of the integrally formed end at the stud end of the housing and a retaining cup is positioned adjacent the inner side of the base end of the housing for facilitating positioning of the igniter tube and for retaining it in place. A retainer disk is provided to keep the retaining cup and the gas generant material in place within the housing during the assembly operation, suitably spaced from the flange member which spins relatively to the base end of the housing during the inertia welding operation.

Also extending over a substantial portion of the length of the tubular housing and positioned concentrically therein is an elongated perforated cylindrical inner tube or basket. The inner tube is positioned concentrically relatively to the igniter tube and outer housing by means of a circular groove in a silicone pad at the stud end of the housing and by a silicone pad positioned against the retainer disk adjacent to the flange member at the base end of the housing.

Gas generant material is contained in an elongated space or region having an annular cross section between the igniter tube and the inner tube or basket. The annular space is the combustion or gas generant chamber of the gas generator.

Upon initiation of gas generation, generated gases flow from the combustion chamber through perforations in the perforated inner tube into a radially outward space or region having an annular cross section located between the inner tube and the inner wall of the housing. A gas filtering assembly is positioned in this radially outward positioned space. Positioned between the filtering assembly and the wall of the housing is a foil seal barrier.

In the operation of a gas generator as described herein, several problems have been encountered involving post fire flammable outgassing. This is the result of non-pyrotechnic flammables from inside the gas generator. In addition the rubber boot on the end of the igniter tube is susceptible to being pulled off or forced over the igniter tube during installation or assembly anomalies. Such displacement of the rubber boot tends to result in loss of ignition granules from the igniter tube which can cause ignition irregularities.

Thus, there is a need and a demand for an improved igniter system for the passenger air bag gas generator that provides a positive retention system for the ignition granules in the igniter and will withstand installation anomalies and last for the lifetime of environments experienced by the gas generator assembly.

In an arrangement disclosed in US-A-3,618,521, the igniter tube is secured by a small collar surrounding the tube at one end and wedged in a central bore of a sleeve. The end of the tube is closed off by an adhesive silicone rubber end cap and the whole is retained in position by a disc-shaped rubber sealing element held under compression by a threaded plug in the end of the generator housing.

The present invention consists in an igniter tube boot for closing an air bag gas generator ignition system igniter tube, comprising a tube having a leading end and a trailing end, and further including a retainer disk having a diameter that is substantially the same as that of the trailing end of the igniter tube boot, characterised in that the tube has a tapered cylindrical shape, said leading end having a larger diameter than said trailing end, and said trailing end being radially inwardly curved and slightly inverted. The igniter tube boot of the invention can assist the elimination of post fire flammable off-gassing while providing a positive retention system for closing the end of the igniter tube at the stud end of the gas generator. The boot can be made durable and resistent to damage during installation processes.

By means of the invention there can be provided a permanently installed non-pyrotechnic, non-flammable retainer boot which may be made of a metal such as aluminum and press fit for ease of installation, sealing and enhanced retention, and positively retention-crimped onto the end of the igniter tube.

The closure incorporates an ignition granule retention disk which is capable of having a flame front pass through the disk.

The boot may for example be retained by an interference fit of the boot onto the igniter tube and crimping of the leading edge thereof into a suitably positioned groove on the igniter tube. The ignition granule retainer disk may be provided with an interference fit into the full depth of the closure, seating against the end of the igniter tube when installed.

The boot is preferably formed with a flared leading edge for ease of installation on the end of the igniter tube.

With this description of the invention a detailed description follows with reference being made to the accompanying drawings which form part of the specification and in which like parts are designated by the same reference numerals, of which drawings:
Fig. 1 is a longitudinal partially cross sectioned view of a prior art gas generator or inflator in which a rubber igniter boot is utilized to close the end of the igniter tube adjacent to the stud end of the gas generator;
Fig. 2 is a cross sectional view of the gas generator of Fig. 1 taken on the lines 2-2;
Fig. 3 is a fragmented enlarged cross sectional view of the igniter tube with an attached rubber igniter boot and ignition granule retention disk utilized in the prior art gas generator shown in Figs. 1 and 3;
Fig. 4 is a cross sectional view of a metal boot or cap closure provided, according to the invention, as a replacement for a rubber boot to close the end of an ignition system igniter tube;
Fig. 5 is a view of the metal boot or cap closure shown in Fig. 4 from the larger open end thereof;
Fig. 6 is a cross sectional view of a modified and preferred metal boot or cap closure, according to the invention, as a replacement for a rubber boot to close the end of an ignition system tube;
Fig. 7 is a view of the metal boot or cap closure shown in Fig. 6 from the larger open end thereof;
Fig. 8 is a cross sectional view of the modified and preferred metal boot or cap closure shown in Figs. 6 and 7 with an ignition granule retention disk installed to full depth therein; and
Fig. 9 is a fragmented cross sectioned and partially enlarged view of an ignition system igniter tube having a metal boot or cap closure as shown in either Fig. 4 or Fig. 6 attached to the end thereof and incorporating an ignition granule retention disk seated against the adjacent end of the igniter tube.

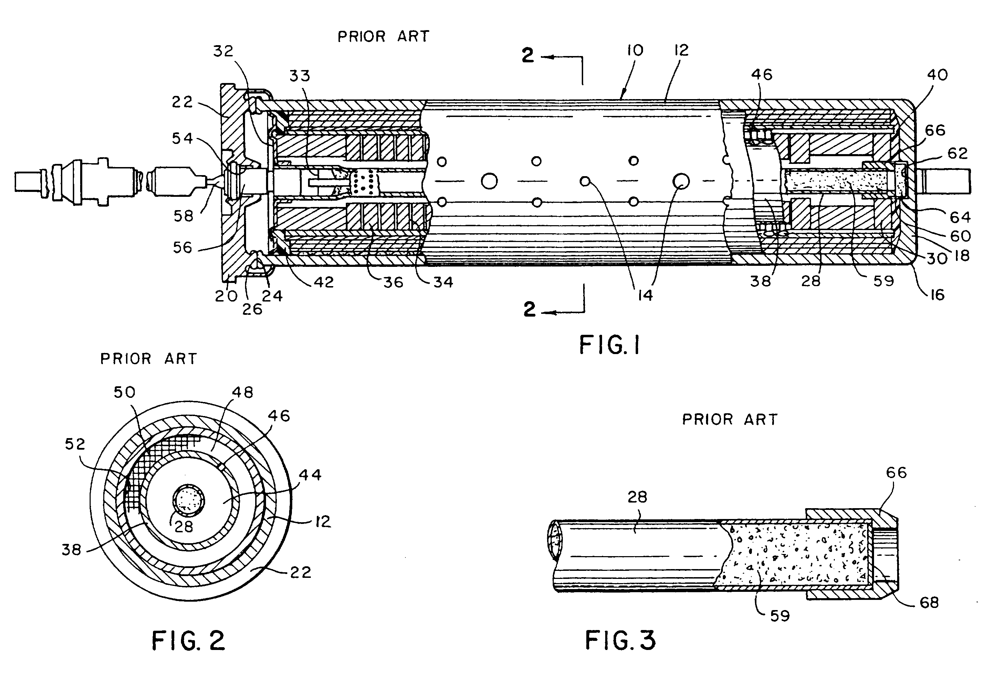

The prior art gas generator or inflator indicated at 10 in Fig. 1 of the drawings is useful in an automotive vehicle crash protection cushion restraint system that includes an air bag (not shown). The generator 10 is particularly adapted for use on the passenger side of the vehicle, being mounted in an appropriate manner in or on the dashboard of the vehicle.

The gas generator 10, as shown, includes an elongated tubular outer housing 12 made of aluminum. For a substantial portion of the length thereof, the outer housing 12 has a thin cylindrical wall in which a plurality of gas exit outlets or holes 14 are provided.

One end 16 of the housing 12, termed the stud end, is closed by a member 18 which, as shown in Fig. 1, may be formed integrally therewith. The other end 20 of the housing 12, termed the base end, is closed by a squib holder and flange member 22. Member 22 may be attached in a sealing manner to the end of housing 12 by a suitable process such as by inertia welding, as illustrated by welds 24. Adjacent the periphery of the inner surface of the flange member 22 is a circular ridge 26 that is welded to the adjacent end of the housing 12 during this process.

Extending generally over the length of tubular member 12 and centrally located thereof so as to be generally concentric therewith is an elongated generally cylindrical perforated tubular member 28. Member 28 functions as an igniter tube.

An igniter tube locator silicone pad 30 is positioned adjacent the inner side of stud end member 18. A retainer disk 32 and igniter tube retaining cup 33 are positioned adjacent the inner side of the base end flange member 22 for facilitating positioning of the igniter tube 28 for retaining it in place. The retainer disk 32 serves also to keep gas generant material comprising a plurality of wafers 34 which are arranged in a side-by-side spaced apart array in place within the housing 12. During the assembly operation, the retainer disk 32, by means of an annular spacer 36, keeps the gas generant wafers 34 suitably spaced apart from the flange member 22 which spins relatively to the housing 12 during the inertia welding operation.

Also extending generally over the length of the tubular housing 12 and positioned concentrically therein is an elongated perforated cylindrical inner tube or basket 38 which may be composed of mild steel or other material. Basket 38 is positioned concentrically relatively to the flash igniter tube 28 and housing 12 by means of a circular groove in a silicone pad 40 at the stud end 16 of housing 12 and by a silicone pad 42 at the base end 20 of housing 12.

The gas generant wafers 34 are contained in an elongated space or region 44 having an annular cross section, as best seen in Fig. 2, between the flash igniter tube 28 and the basket 38. The annular space 44 forms and is referred to hereinafter as the combustion or gas generant chamber of the inflator 10. The wafers 34 have the shape of washers with the inner and outer diameters thereof being generally the same as the inner and outer diameters, respectively, of the annularly shaped combustion chamber 44.

Generated gases flow from the combustion chamber 44 through perforations 46 in the perforated basket 38 into an annular space 48 between the basket 38 and the inner wall of the housing 12. A gas filtering assembly 50 is positioned in the annular space 48. Positioned between the filtering assembly 50 and the inner wall of the housing 12 is a heat seal foil barrier 52 which may have a thickness of 0.010 cm (0.004 in).

The gas filtering assembly 50 is annular in cross section. By way of example but not limitation, the gas filtering assembly 50 may include, beginning with the innermost layer, next to the basket 38, two wraps of nickel coated carbon or stainless steel 595 µm (30 mesh) screen, then metal filter such as 80 x 700 or 50 x 250 mesh stainless steel or 40 x 180 mesh nickel coated carbon, then a single wrap of ceramic filter paper 0.020 cm (0.080 in) thick, followed by two wraps of 595 µm (30 mesh) stainless steel or nickel coated carbon. Lastly, a wrap of 4 mm (5 mesh) stainless steel or nickel coated carbon may be provided adjacent the wall of the housing 12 to allow space around exit ports or holes 14 therein for the free passage of the generated gases. The gas filtering assembly 50, however, may contain any other suitable filtering arrangement.

Adjacent the inner wall of the perforated basket 38 within the combustion chamber 44 may be disposed two or three wraps of 595 µm (30 mesh) nickel coated carbon or stainless steel cooling screen (not shown).

The gas generant wafers 34 may be made from one of a number of compositions meeting the requirements of burning rate, non-toxicity and flame temperature. One composition that may be utilized is that described in US-A- 4,203,787 to Schneiter et al. Another composition that may be used advantageously is that described in US-A- 4,369,079 to Shaw.

The present invention is not limited to any particular composition or geometrical shape of the gas generant material in the combustion chamber 44. Thus, the gas generant material may comprise a charge of pyrotechnic material in the form of pellets which may be similar to the pellets of gas generant material disclosed in the aforesaid US-A-4,547,342.

By way of example and not limitation, it is noted that the igniter tube 28 may comprise a 27.94 cm (11 in) long 21 gauge hollow cylindrical body of carbon steel having an outside diameter of 0.95 cm (3/8 in) that has been coated with iron phosphate or aluminized and into which perforations have been introduced by piercing the cylindrical wall thereof. Alternatively, the igniter tube 28, again having a length of 27.94 cm (11in), may be made of 30 mesh carbon steel screen coated with iron phosphate or aluminized, rolled and welded into a tube having an outside diameter of 0.95 cm (3/8 in).

Pressed into a centrally positioned aperture 54 of the flange member 22 at the base end 20 of housing 12 is an initiator assembly 56 which includes a suitable squib (not shown). The squib and initiator assembly 56 are positioned in the adjacent end of the igniter tube 28 and are connected by wires 58 which lead to a source of electrical power for initiating ignition of the gas generator 10.

Contained within the initiator assembly 56 is a suitable pyrotechnic material comprising granules 59 which may be any of a variety of compositions meeting the requirements for rapid ignition and non-toxicity. A typical material for this use may be BKNO₃ powder. The pyrotechnic material is ignitable by the squib (not shown).

As shown in Fig. 1, a container 60 is provided in a recess 62 in the inner wall of member 18 at the stud end 16 of housing 12 in alignment with the adjacent end of the flash igniter tube 28. Container 60 holds or contains auto ignition granules 64 to define an auto ignition device similar to the auto ignition device disclosed in US-A-4,561,675 to Adams et al. The granules 64 are ignitable to cause the pyrotechnics in the gas generator 10 to function when subjected to a high temperature environment, such as a bonfire, at a temperature in the 177°C (350°F) range instead of the 343°C (650°F) range at which the gas generator pyrotechnics would ignite if the auto ignition device were not provided. This enables the use of aluminum for the gas generator housing 12, the aluminum having sufficient high temperature properties to contain the internal auto ignition pressures that are produced at a temperature of 177°C (350°F) but not at 343°C (650°F). The housing 12 is preferably composed of aluminum in order to minimize the weight of the gas generator 10.

At the end of the igniter tube 28 that is adjacent the stud end 16 of the housing 12, as best seen in Figs. 1 and 3, the igniter tube 28 is closed by a rubber boot 66 and an ignition granule retention disk 68. The rubber boot 66 is made of a non-pyrotechnic flammable material. Being located inside the gas generator 10, it is the source of a problem giving rise to post fire flammable outgassing during the generation of gas by the gas generator 10. In addition, during the installation or assembly of the gas generator 10, the rubber boot 66 potentially is capable of being influenced by installation anomalies and pulled off or forced over the igniter tube.

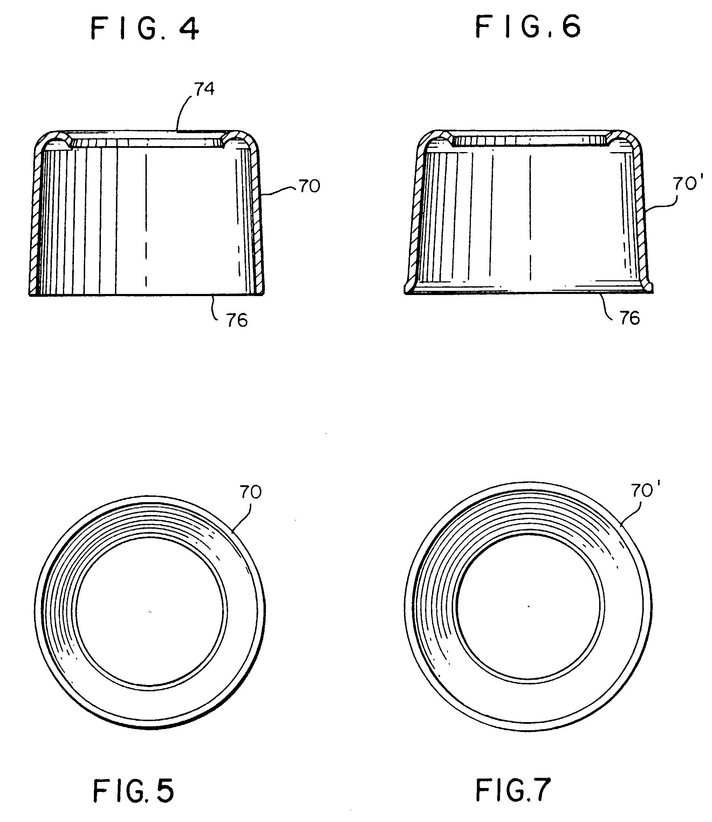

In accordance with the invention, as shown in Figs. 4-9, there has been provided a non-pyrotechnic, non-flammable metal boot or cap closure 70 and an incorporated ignition granule retention disk 72 for closing the end of the end of the ignition system igniter tube 28 adjacent the stud end of the gas generator outer housing 12. At the smaller open or trailing end 74, the wall of the closure 70, as shown in Fig. 4 is curved inwardly and inverted slightly, that is, slightly reversed in direction. Between the open ends 74 and 76, the closure 70 is tapered, that is, the diameter thereof increases, spreading outward by degrees in the direction to the larger or leading end 76.

In a modified and preferred embodiment of the invention, the closure, designated 70' and shown in Fig. 6 differs from the closure 70 in that the open end 76 is flared, that is, widened additionally or spread outwardly for a short distance.

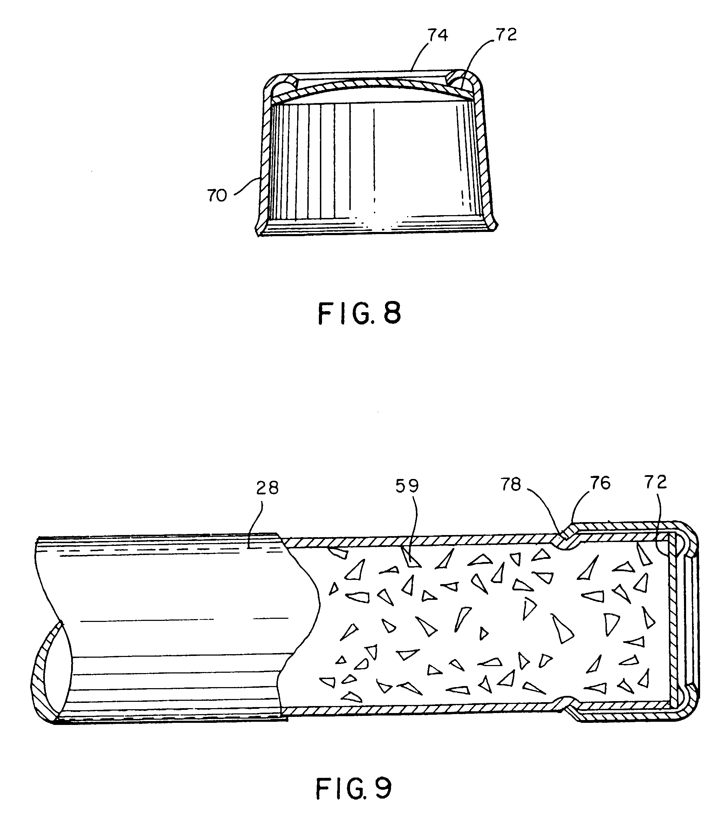

Each of the closures 70 and 70' provides a seal fit with positive retention/crimping onto the igniter tube 28, as shown in Fig. 9, with the larger diameter end 76 crimped into a suitably positioned crimp groove 78 on the igniter tube 28. The metal of which the closures 70 and 70' are made is bendable to allow such crimping.

This system of attachment of the closure incorporates both an interference fit of the closures 70 and 70' onto the igniter tube 28 and crimping of the leading edge 76 on the igniter tube 28. The ignition granules retention disk 72, as shown in Fig. 8, has an interference fit into the full depth between ends 74 and 76 of the closure 70 and seats against the end of the igniter tube 28, being pressed thereagainst by the open end 74, as shown in Fig. 9, when installed thereon.

While the ignition granule retention disk 72 may be made of any suitable non-pyrotechnic, non-flammable material, a preferred form thereof according to the invention is a wire cloth mesh. So configured the ignition granule retention disk 72 is capable of having a flame front pass therethrough.

This is particularly advantageous in facilitating the auto ignition functioning of the pyrotechnics in the gas generator when subjected to a high temperature environment, such as a bonfire. That is to say, upon ignition of the auto ignition granules 64, as shown in Fig. 1, the flame front produced thereby quickly passes through the igniter granule retention disk 72 and ignites the ignition granules 59 in the igniter tube 28 and causes the pyrotechnics of the gas generator 10 to function.

Thus, in accordance with the invention, there has been provided an improvement to the igniter tube and guide boot of a passenger air bag gas generator for effecting the elimination of post fire flammable off-gassing and for providing a positive retention system for closing the end of the igniter tube at the stud end of the gas generator. There has been provided a durable guide boot for an igniter tube which is not subject to potential damage during installation processes. The system provided is a positive permanent retention system.

## Claims

1. An igniter tube boot for closing an air bag gas generator ignition system igniter tube, comprising a tube (70,70') having a leading end (76) and a trailing end (74), and further including a retainer disk (72) having a diameter that is substantially the same as that of the trailing end (74) of the igniter tube boot, characterised in that the tube (70, 70') has a tapered cylindrical shape, said leading end having a larger diameter than said trailing end, and said trailing end being radially inwardly curved and slightly inverted.

2. An igniter tube boot as claimed in claim 1 wherein said tube (70,70') is made of a non-pyrotechnic, non-flammable material.

3. An igniter tube boot as claimed in claim 1 or claim 2 wherein said leading end (76) of the tapered cylindrical tube (70') is flared slightly.

4. An igniter tube boot as claimed in any preceding claim, wherein said tapered cylindrical tube (70,70') is made of a metal.

5. An igniter tube boot as claimed in claim 4, wherein said tapered cylindrical tube (70,70') is made of aluminum.

6. An igniter tube boot as claimed in any preceding claim, wherein said leading end (76) of the tapered cylindrical tube is bendable to allow crimping thereof into a suitably positioned notch or groove (78) on the end of the igniter tube (28) on which said tube boot is to be installed.

7. An igniter tube boot as defined in claim 6, wherein said retainer disk has an interference fit into substantially the full depth of said tapered cylindrical tube when installed therein from said leading end (76) thereof, and seating against the end of the igniter tube when so installed, being forced thereagainst by the slightly inverted trailing end (74) of said cylindrical tube.

8. An igniter tube boot as claimed in claim 7, wherein said retainer disk (72) comprises a wire cloth mesh.

9. An air bag gas generator ignition system comprising an igniter tube (28) containing ignition granules (59), said igniter tube being closed at one end by a boot as claimed in any preceding claim.

10. An air bag gas generator ignition system as claimed in claim 9, wherein said leading end (76) of the tapered cylindrical tube is of slightly larger diameter than the ignition tube (28) and is crimped into a notch or groove (78) at the end of the igniter tube.

## Patentansprüche

1. Führungselement für ein Zündrohr zum Verschließen des Zündrohres eines Airbag-Gasgeneratorzündsystems mit einem Rohr (70, 70') mit einem Vorderende (76) und einem Hinterende (74) sowie weiterhin mit einer Haltescheibe (72) mit einem Durchmesser, der im wesentlichen der gleiche ist wie jener des Hinterendes (74) des Führungselementes des Zündrohres, dadurch gekennzeichnet, daß das Rohr (70, 70') eine sich verjüngende zylindrische Form hat, wobei das Vorderende einen größeren Durchmesser als das Hinterende besitzt und das Hinterende radial nach innen gekrümmt und etwas umgekehrt ist.

2. Führungselement für ein Zündrohr nach Anspruch 1, bei dem das Rohr (70, 70') aus einem nicht-pyrotechnischen, nicht-entflammbaren Material besteht.

3. Führungselement für ein Zündrohr nach Anspruch 1 oder Anspruch 2, bei dem das Vorderende (76) des sich verjüngenden zylindrischen Rohres (70') etwas konisch erweitert ist.

4. Führungselement für ein Zündrohr nach einem der vorausgehenden Ansprüche, bei dem das sich verjüngende zylindrische Rohr (70, 70') aus einem Metall besteht.

5. Führungselement für ein Zündrohr nach Anspruch 4, bei dem das sich verjüngende zylindrische Rohr (70, 70') aus Aluminium besteht.

6. Führungselement für ein Zündrohr nach einem der vorausgehenden Ansprüche, bei dem das Vorderende (76) des sich verjüngenden zylindrischen Rohres so biegbar ist, daß es sein Eindrücken in eine geeignet positionierte Kerbe oder Nut (78) am Ende des Zündrohres (28) erlaubt, auf welchem das Führungselement für das Rohr montiert werden soll.

7. Führungselement für ein Zündrohr nach Anspruch 6, bei dem die Haltescheibe einen Preßsitz in im wesentlichen der vollen Tiefe des sich verjüngenden zylindrischen Rohres hat, wenn sie von dessen Vorderende (76) aus darin montiert ist, und auf dem Ende des Zündrohres sitzt, wenn sie so montiert ist, und durch das etwas umgekehrte Hinterende (74) des zylindrischen Rohres dagegengepreßt wird.

8. Führungselement für ein Zündrohr nach Anspruch 7, bei dem die Haltescheibe (72) ein Drahtgewebesieb umfaßt.

9. Airbag-Gasgeneratorzündsystem mit einem Zündrohr (28), das Zündgranalien (59) enthält, wobei dieses Zündrohr an einem Ende durch ein Führungselement nach einem der vorausgehenden Ansprüche verschlossen ist.

10. Airbag-Gasgeneratorzündsystem nach Anspruch 9, bei dem das Vorderende (76) des sich verjüngenden zylindrischen Rohres einen etwas größeren Durchmesser als das Zündrohr (28) hat und in eine Kerbe oder Nut (78) am Ende des Zündrohres eingedrückt ist.

## Revendications

1. Coiffe pour tube d'allumage, destinée à fermer un tube d'allumage dans un système d'allumage pour un générateur de gaz d'airbag, comprenant un tube (70, 70') ayant une extrémité avant (76) et une extrémité arrière (74), et comprenant en outre un disque de retenue (72) ayant un diamètre qui est sensiblement le même que celui de l'extrémité arrière (74) de la coiffe du tube d'allumage, caractérisée en ce que le tube (70, 70') a une forme cylindrique évasée, ladite extrémité avant ayant un diamètre plus important que ladite extrémité arrière, et ladite extrémité arrière étant radialement incurvée vers l'intérieur et légèrement inversée.

2. Coiffe pour tube d'allumage selon la revendication 1, dans laquelle ledit tube (70, 70') est réalisé en un matériau non-pyrotechnique, ininflammable.

3. Coiffe pour tube d'allumage selon l'une ou l'autre des revendications 1 et 2, dans laquelle ladite extrémité avant (76) du tube cylindrique évasé (70') est légèrement évasée.

4. Coiffe pour tube d'allumage selon l'une quelconque des revendications précédentes, dans laquelle ledit tube cylindrique évasé (70, 70') est réalisé en métal.

5. Coiffe pour tube d'allumage selon la revendication 4, dans lequel ledit tube cylindrique évasé (70, 70') est réalisé en aluminium.

6. Coiffe pour tube d'allumage selon l'une quelconque des revendications précédentes, dans laquelle ladite extrémité avant (76) du tube cylindrique évasé est susceptible d'être fléchie pour permettre son sertissage dans une entaille ou une gorge (78) positionnée de façon convenable sur l'extrémité du tube d'allumage (28) sur lequel on doit installer ladite coiffe de tube.

7. Coiffe pour tube d'allumage selon la revendication 6, dans laquelle ledit disque de retenue présente un engagement serré sur sensiblement la totalité de la profondeur dudit tube cylindrique évasé lorsqu'il est installé dans celui-ci depuis ladite extrémité avant (76) de celui-ci, et étant appuyé contre l'extrémité du tube d'allumage lorsqu'il est ainsi installé, en étant forcé contre celui-ci par l'extrémité arrière légèrement inversée (74) dudit tube cylindrique.

8. Coiffe pour tube d'allumage selon la revendication 7, dans laquelle ledit disque de retenue (72) comprend un tissu grillagé de fils.

9. Système d'allumage pour générateur de gaz d'airbag, comprenant un tube d'allumage (28) qui contient des granulés d'allumage (59), ledit tube d'allumage étant fermé à une extrémité par une coiffe telle que revendiquée dans l'une quelconque des revendications précédentes.

10. Système d'allumage pour générateur de gaz d'airbag, selon la revendication 9, dans lequel ladite extrémité avant (76) du tube cylindrique évasé a un diamètre légèrement supérieur au tube d'allumage (28), et elle est sertie dans une entaille ou une gorge (78) à l'extrémité du tube d'allumage.
